# EUROPÄISCHE PATENTSCHRIFT

(11) **EP 1 027 538 B1**
(45) Veröffentlichungstag und Bekanntmachung des Hinweises auf die Patenterteilung: **19.01.2005**
(21) Anmeldenummer: 99911591.8
(22) Anmeldetag: 09.02.1999
(51) Int. Cl.: F04B 1/04, F04B 53/12, F04B 53/14, B60T 8/40

(54) **KOLBENPUMPE**
PISTON PUMP
POMPE A PISTON

(30) Priorität: 09.05.1998 DE 19820902
(43) Veröffentlichungstag der Anmeldung: 16.08.2000
(73) Patentinhaber: ROBERT BOSCH GMBH, 70442 Stuttgart (DE)
(72) Erfinder: SCHULLER, Wolfgang, D-74343 Sachsenheim (DE); MAYER, Franz, D-87490 Haldenwang (DE); SCHILLER, Christiane, D-71732 Tamm (DE)
(86) Internationale Anmeldenummer: PCT/DE1999/000342
(87) Internationale Veröffentlichungsnummer: WO 1999/058853

(56) Entgegenhaltungen:
- WO-A-96/28661
- DE-A- 4 322 560
- DE-A- 19 620 701
- DE-A- 19 712 147
- US-A- 4 385 870
- US-A- 5 231 916
- US-A- 5 746 111

## Beschreibung

### Stand der Technik

Die Erfindung betrifft eine Kolbenpumpe mit den Merkmalen des Oberbegriffs des Anspruchs 1, die zur Verwendung in einer schlupfgeregelten oder elektrohydraulischen Fahrzeugbremsanlage vorgesehen ist.

Eine derartige Kolbenpumpe ist bekannt aus der DE 43 22 560 A1. Die bekannte Kolbenpumpe weist ein Pumpengehäuse mit einer Zylinderbohrung auf, in der ein zu einer hin- und hergehenden Hubbewegung antreibbarer Kolben axial verschieblich aufgenommen ist. Der Kolben ist zweiteilig, er weist ein rohrförmiges erstes Teil mit einem Stimflansch an einem Ende auf, das durch Umformen oder Tiefziehen hergestellt ist und auf das ein zweites, ebenfalls rohrförmiges Teil aufgepresst ist. Zwischen einem Stimende des aufgepressten zweiten Teils und dem Stirnflansch des ersten Teils besteht ein axialer Abstand, in dem Dichtringe angeordnet sind. Der Stimflansch des ersten Teils des Kolbens bildet eine axiale Anlage für die Dichtringe. Zwischen der Zylinderbohrung und dem Kolben besteht ein Ringspalt, der Kolben berührt eine Wand der Zylinderbohrung nicht, er kann sich in der Zylinderbohrung schräg stellen. Es berühren nur die Dichtringe des Kolbens die Wand der Zylinderbohrung.

Eine weitere Kolbenpumpe ist bekannt aus der DE 197 12 147 A1. Der Kolben dieser Kolbenpumpe ist ebenfalls in einer Zylinderbohrung eines Pumpengehäuses axial verschieblich aufgenommen und zu einer hin- und hergehenden Hubbewegung antreibbar. Der Kolben ist massiv und mit einem axialen Sackloch als Pumpeneinlass versehen. An einer Ringstufe an einer Außenseite des Kolbens ist ein Stützring als axiale Anlage für einen Dicht- und einen Führungsring angeordnet.

Eine weitere Kolbenpumpe offenbart die W096/28661 A. Diese Kolbenpumpe weist eine Laufbuchse auf, die in eine Zylinderbohrung eines Pumpengehäuses eingepresst ist. In der Laufbuchse ist ein Kolben axial verschieblich aufgenommen, der mit dem Kolben der zuvor genannten Kolbenpumpe vergleichbar ist.

### Vorteile der Erfindung

Bei der erfindungsgemäßen Kolbenpumpe mit den Merkmalen des Anspruchs 1 ist der Kolben rohrartig ausgebildet, seine Herstellung erfolgt beispielsweise durch Tiefziehen. Am Kolben ist durch Umformen, beispielsweise durch axiales Stauchen des rohrartigen Kolbens, ein nach außen stehender, doppelwandiger Wulst angebracht, der eine axiale Anlage für einen Dichtring oder einen Führungsring des Kolbens bildet. Der Wulst weist Abstand von beiden Enden des Kolbens auf. Die Erfindung hat zunächst den Vorteil, dass der Kolben spanlos durch

Umformen und dadurch schnell, einfach und preisgünstig herstellbar ist. Hinzu kommt, daß sich der Kolben durch hohe Maßhaltigkeit und Oberflächengüte auszeichnet, so daß eine Nachbearbeitung nicht erforderlich ist und der Kolben auch ohne Laufbuchse unmittelbar in die Zylinderbohrung des Pumpengehäuses eingesetzt und dort axial verschieblich geführt sein kann. Ein Innenraum des rohrartigen Kolbens wirkt als Dämpferkammer, die einen separaten Fluiddruckschwankungsdämpfer der Kolbenpumpe erübrigt.

Die Unteransprüche haben vorteilhafte Ausgestaltungen und Weiterbildungen der im Anspruch 1 angegebenen Erfindung zum Gegenstand.

Der Kolben der erfindungsgemäßen Kolbenpumpe kann als sog. Einfachkolben ausgebildet, d. h. an zwei axial voneinander beabstandeten Stellen auf dem gleichen Durchmesser geführt sein. Gemäß Anspruch 4 ist der Kolben als Stufenkolben ausgebildet, d. h. er ist beispielsweise im Bereich seines Wulstes auf einem anderen, insbesondere einem größeren Durchmesser als an einem insbesondere einem Antriebsexzenter zugewandten Bereich geführt. Die Stufung des Kolbens beeinflußt das Förderverhalten der Kolbenpumpe, es läßt sich insbesondere ein Ansaugen sowohl während eines sog. Saughubs als auch während eines sog. Förderhubs erreichen, wodurch sich der Förderstrom zumindest auf der Saugseite der Kolbenpumpe vergleichmäßigt.

Gemäß Anspruch 5 weist der Kolben einen durch Umformen hergestellten Ventilsitz eines Ein- oder Auslaßventils der Kolbenpumpe auf. Dies hat den Vorteil einer einfachen Ventilsitzfertigung in einem Arbeitsgang mit der Kolbenherstellung in hoher Qualität und mit infolge einer Materialverfestigung beim Umformvorgang hoher Verschleißfestigkeit.

Bei einer Ausgestaltung der Erfindung gemäß Anspruch 6 ist ein Anlaufstück am Kolben angebracht, dessen einem Antriebsexzenter zugewandte Stirnfläche eine Anlauffläche des Kolbens bildet, mit der der Kolben am Umfang des Antriebsexzenterelements anliegt. Das Anlaufstück ist zumindest im Bereich der Anlauffläche verschleißfest beispielsweise durch Härten oder durch Verwendung eines verschleißfesten Materials ausgebildet. Der Kolben ist dadurch auf einfache Weise beständig gegen die an der Anlauffläche durch Reibung auftretenden Beanspruchungen.

Gemäß Anspruch 7 ist der Kolben mit einer mit ihm einstückigen, vorzugsweise durch Umformen angeformten Stirnwand anstelle des Anslaufstücks ausgebildet, mit der er am Umfang des Antriebsexzenterelements anliegt. Die Stirnwand ist zumindest in dem Bereich, in dem sie am Antriebsexzenterelement anliegt beispielsweise durch lokales Härten verschleißfest ausgebildet. Auf diese Weise wird ein separates Anlaufstück eingespart, die Herstellung der Stirnwand erfolgt in einem Arbeitsgang mit der Kolbenherstellung.

Bei einer Ausgestaltung der Erfindung gemäß Anspruch 8 weist die Kolbenpumpe eine rohrartige Laufbuchse auf, die in die Zylinderbohrung des Pumpengehäuses eingesetzt ist. Bei einer Weiterbildung gemäß Anspruch 9 ist durch Umformen ein Ventilsitz eines Aus- oder Einlaßventils der Kolbenpumpe an der Laufbuchse angebracht. Dadurch wird auf einfache Weise der Ventilsitz in einem Arbeitsgang mit der Herstellung der Laufbuchse gefertigt. Der Ventilsitz weist eine hohe Oberflächengüte und durch Materialverfestigung beim Umformen eine hohe Verschleißfestigkeit auf.

Zum Verschließen der Zylinderbohrung auf einer dem Antriebsexzenter abgewandten Seite, weist die erfindungsgemäße Kolbenpumpe gemäß Anspruch 10 ein als Tiefziehteil hergestelltes Verschlußelement auf. Diese Ausgestaltung der Erfindung hat den Vorteil, daß das Verschlußelement spanlos schnell und preisgünstig herstellbar ist. Bei einer Ausgestaltung der Erfindung gemäß Anspruch 11 ist der Ventilsitz eines Aus- oder Einlaßventils der Kolbenpumpe an einem durch Umformen, beispielsweise Tiefziehen hergestellten Ventilsitzteil angebracht. Diese Ausgestaltung hat dieselben Vorteile wie der an der Laufbuchse durch Umformen hergestellte Ventilsitz, sie ist insbesondere für Kolbenpumpen ohne Laufbuchse vorgesehen.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand zweier in der Zeichnung dargestellter, bevorzugt ausgewählter Ausführungsbeispiele näher erläutert. Die beiden Zeichnungen zeigen zwei erfindungsgemäße Kolbenpumpen im Achsschnitt.

### Beschreibung des ersten Ausführungsbeispiels

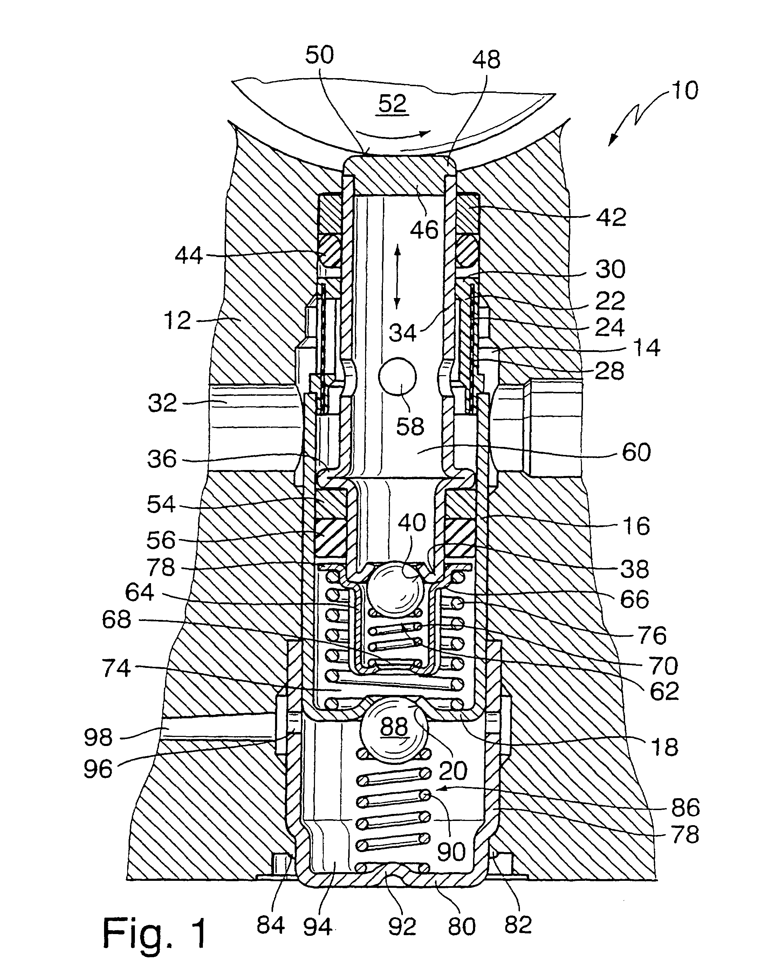

Die in Figur 1 dargestellte, erfindungsgemäße Kolbenpumpe 10 ist in einen Hydraulikblock 12 einer schlupfgeregelten, im übrigen nicht dargestellten Fahrzeugbremsanlage untergebracht. In den Hydraulikblock 12, von dem der klaren Darstellung wegen lediglich ein die Kolbenpumpe 10 umgebendes Bruchstück dargestellt ist, sind weitere, nicht dargestellte hydraulische Bauelemente, wie beispielsweise Magnetventile, der schlupfgeregelten Fahrzeugbremsanlage eingesetzt und durch den Hydraulikblock 12 miteinander und mit der Kolbenpumpe 10 hydraulisch verschaltet. Der Hydraulikblock 12 ist hydraulisch an einen nicht dargestellten Hauptbremszylinder angeschlossen, an den Hydraulikblock sind nicht dargestellte Radbremszylinder angeschlossen. Der Hydraulikblock 12 bildet ein Pumpengehäuse 12 der erfindungsgemäßen Kolbenpumpe 10 und wird nachfolgend als solches bezeichnet.

Im Pumpengehäuse 12 ist eine Zylinderbohrung 14 angebracht, in die eine Laufbuchse 16 eingepreßt ist. Die Laufbuchse 16 ist ein zylindrisches, rohrförmiges, durch Umformen, insbesondere durch Tiefziehen aus Blech in einem Arbeitsgang hergestelltes Bauteil. Die Laufbuchse 16 ist einstückig mit einem Laufbuchsenboden 18, an den ein Ventilsitz 20 durch Umformen in einem Arbeitsgang mit der Herstellung der Laufbuchse 16 angebracht ist.

In ein offenes Ende der Laufbuchse 16 ist ein hohlzylindrisches Filterelement 22 in Verlängerung der Laufbuchse 16 eingepreßt. Das Filterelement 22 weist ein hohlzylindrisches Filtersieb 24 auf, das mit einem Filtergerüst 26 aus Kunststoff umspritzt ist, welches axial verlaufende, über den Umfang verteilt angeordnete Filterstege 28 aufweist, die an ihren Enden einstückig in Filterringe 30 übergehen, in die die Enden des Filtersiebs 24 eingebettet sind. Als Pumpeneinlaß weist die erfindungsgemäße Kolbenpumpe 10 eine zur Zylinderbohrung 14 radiale Einlaßbohrung 32 auf, von der aus mit der Kolbenpumpe 10 zu fördernde Bremsflüssigkeit in die Zylinderbohrung 14 eintritt und nach Durchströmen des Filtersiebs 24 ins Innere der Laufbuchse 16 gelangt.

In der Laufbuchse 16 ist ein Kolben 34 axial verschieblich aufgenommen. Der Kolben 34 steht aus dem offenen Ende der Laufbuchse 18 vor, er ragt durch das hohlzylindrische Filterelement 22 hindurch und steht aus dem Filterelement 22 in die Zylinderbohrung 14 hinein vor. Der Kolben 34 ist rohrförmig durch Umformen, insbesondere durch Tiefziehen aus Blech hergestellt. Er weist innerhalb der Laufbuchse 16 einen umlaufenden, radial überstehenden Wulst 36 auf, der durch axiales Stauchen des Kolbens 34 hergestellt ist. An seinem in der Laufbuchse 16 befindlichen Ende weist der Kolben 34 einen mit ihm einstückigen Kolbenboden 38 auf, in dessen Mitte ein Ventilsitz 40 durch Umformen in einem Arbeitsgang mit der Herstellung des Kolbens 34 angebracht ist. Die Herstellung des Ventilsitzes 40 am Kolbenboden 38 ebenso wie des Ventilsitzes 20 am Laufbuchsenboden 18 bewirkt eine Materialverfestigung im Bereich des Ventilsitzes 20, 40, die die Verschleißfestigkeit des Ventilsitzes 20, 40 erhöht. Die Ventilsitze 20, 40 können zusätzlich gehärtet sein.

Das aus der Laufbuchse 16 vorstehende Ende des Kolbens 34 ist mittels eines in die Zylinderbohrung 14 eingesetzten Führungsring 42 axial verschieblich geführt und mittels eines Dichtrings 44 im Pumpengehäuse 12 abgedichtet.

In das aus der Laufbuchse 16 vorstehende Ende des Kolbens 34 ist ein scheibenförmiges Anlaufstück 46 bis zur Anlage einer umlaufenden Anschlagschulter 48 am Kolben 34 fluiddicht in den Kolben 34 eingepreßt. Zur Sicherstellung der Dichtheit kann das Anlaufstück 46 mit dem Kolben 34 beispielsweise verschweißt, insbesondere laserverschweißt sein. Das Anlaufstück 46 ist durch Umformen, beispielsweise Kaltschlagen aus Stahl hergestellt. Das Umformen bewirkt eine Materialverfestigung, die die Verschleißfestigkeit des Anlaufstücks 46 erhöht. Eine äußere Stirnfläche des Anlaufstücks 46 bildet eine Anlauffläche 50, mit der Kolben 34 am Umfang eines elektromotorisch rotierend antreibbaren Exzenters 52 anliegt. Der Exzenter 52 dient in an sich bekannter Weise zum Antrieb des Kolbens 34 zu einer in axialer Richtung hin- und hergehenden Hubbewegung. Zur Steigerung der Verschleißfestigkeit kann das Anlaufstück 46 durchgehend oder zumindest im Bereich der Anlauffläche 50 gehärtet sein.

An seinem in der Laufbuchse 16 befindlichen Ende ist der Kolben 34 mittels eines Führungsrings 54 in der Laufbuchse 16 geführt und mittels eines Dichtrings 56 abgedichtet. Der Führungsring 54 ist auf einer dem Laufbuchsenboden 18 zugewandten Seite des Wulstes 36 auf das Ende des Kolbens 34 aufgesetzt. Der Wulst 36 bildet eine axiale Anlage für den Führungsring 54. Der Dichtri ng 56 ist axial an den Führungsring 54 anschließend auf das in der Laufbuchse 16 befindliche Ende des Kolbens 34 aufgesetzt. Der Kolben 34 ist also in der Laufbuchse 16 auf einem größeren Durchmesser geführt und abgedichtet als auf seinem aus der Laufbuchse 16 in die Zylinderbohrung 14 vorstehenden Ende, der Kolben 34 ist somit als Stufenkolben ausgebildet.

Zum Fluideinlaß sind vier über den Umfang verteilt angeordnete Einlaßöffnungen 58 aus dem Umfang des Kolbens 30 auf der dem Laufbuchsenboden 18 abgewandten Seite des Wulstes 36 ausgestanzt. Bremsflüssigkeit aus dem Inneren der Laufbuchse 16 gelangt durch diese Einlaßöffnungen 58 in einen Innenraum 60 des rohrförmigen Kolbens 34. Der aufgrund der dünnwandigen Ausbildung des Kolbens 34 großvolumige Innenraum bildet eine saugseitige Dämpferkammer 60 der erfindungsgemäßen Kolbenpumpe 10, die Bremsflüssigkeitsdruckschwankungen, welche insbesondere durch die pulsierende Förderweise der Kolbenpumpe 10 verursacht werden, dämpft.

An dem in der Laufbuchse 16 befindlichen Ende des Kolbens 34 ist ein als federbelastetes Rückschlagventil ausgebildetes Einlaßventil 62 der Kolbenpumpe 10 angebracht: Das Einlaßventil 62 weist einen als Tiefziehteil aus Blech hergestellten, napfförmigen Ventilkäfig 64 auf, der mit einer umlaufenden Ringstufe 66 von außen auf das Ende des Kolbens 34 aufgesetzt ist. Der Ventilkäfig 64 ist mit einem oder mehreren ausgestanzten Bremsflüssigkeitsdurchlässen 68 versehen. In den Ventilkäfig 64 ist eine Schraubendruckfeder als Ventilschließfeder 70 eingesetzt, die eine einen Ventilschließkörper des Einlaßventils 62 bildende, im Ventilkäfig 64 aufgenommene Ventilkugel 73 gegen den Ventilsitz 40 am Kolbenboden 38 drückt. Das am Kolben 34 angebrachte Einlaßventil 62 befindet sich in einem Verdrängungsraum 74 der Kolbenpumpe 10, der umfangsseitig von der Laufbuchse 16 umschlossen und stirnseitig vom Laufbuchsenboden 18 einerseits und vom Kolbenboden 38 und dem auf den Kolben 34 aufgesetzten Dichtring 56 andererseits begrenzt ist. Ein Volumen des Verdrängungsraums 74 vergrößert und verkleinert sich während der hin- und hergehenden Hubbewegung des Kolbens 34, wodurch die Kolbenpumpe 10 in an sich bekannter Weise Bremsflüssigkeit fördert.

In den Verdränungsraum ist eine Schraubendruckfeder als Kolbenrückstellfeder 76 eingesetzt, die sich innen am Laufbuchsenboden 18 abstützt und die gegen einen kreisscheibenförmigen Federteller 78 drückt, der einstückig radial nach außen abstehend an einen freien Rand des Ventilkäfigs 64 angeformt ist. Die Kolbenrückstellfeder 76 drückt den Kolben 34 mit dessen Anlauffläche 50 gegen den Umfang des Exzenters 52. Die Kolbenrückstellfeder 76 ist so stark ausgebildet, daß sie den Kolben 34 bei allen im Betrieb der Kolbenpumpe 10 auftretenden Belastungen in Anlage am Exzenter 52 und den Ventilkäfig gegen die Kraft der Ventilschließfeder 70 am Kolben 34 hält.

Die Laufbuchse 16 mit dem in sie eingesetzten Kolben 34, an dem das Einlaßventil 62 angebracht ist, mit der Kolbenrückstellfeder 76 sowie dem in die Laufbuchse 16 eingepreßten Filterelement 22 bildet eine Vormontagebaugruppe. Dabei bildet das Filterelement 22 eine Verliersicherung für den Kolben 34, die den Kolben 34 an dessen Wulst 36 bis zum Einsetzen in die Zylinderbohrung 14 in der Laufbuchse 16 hält. Zugleich richtet das Filterelement 22 den Kolben 34 bis zum Einsetzen der Vormontagebaugruppe in die Zylinderbohrung 14 mit seinem der Laufbuchse 16 fernen Filterring 30 axial in der Laufbuchse 16 aus, wodurch das Einführen und Einpressen der Vormontagebaugruppe in die Zylinderbohrung 14 problemlos möglich ist. Die in die Zylinderbohrung 14 eingepreßte Laufbuchse 16 trennt eine Niederdruckseite (Pumpeneinlaß) hydraulisch von einer Hochdruckseite (Pumpenauslaß).

Ein dem Exzenter 52 abgewandtes Ende der Zylinderbohrung 14 ist mit einem Verschlußelement 78 druckdicht verschlossen. Das Verschlußelement 78 ist ein hohlzylindrisches Tiefziehteil aus Blech ausgebildet, das einstückig mit einem öffnungslosen Verschlußboden 80 ist. Das Verschlußelement 78 weist eine umlaufende Ringstufe 82 auf, an der es durch eine umlaufende Verstemmung 84 des Pumpengehäuses 12 gehalten und druckfest abgedichtet ist.

In das Verschlußelement 78 ist ein als federbelastetes Rückschlagventil ausgebildetes Auslaßventil 86 der Kolbenpumpe 10 eingesetzt: Eine Ventilkugel 88 als Ventilschließkörper wird von einer Ventilschließfeder 90 in Form einer Schraubendruckfeder gegen den Ventilsitz 20 am Laufbuchsenboden 18 gedrückt. Die Ventilschließfeder 90 stützt sich am Verschlußboden 80 ab, an dem zur Zentrierung der Ventilschließfeder 90 eine nach innen stehende, kuppelförmige Federzentrierung 92 angeformt ist. Ein Innenraum des Verschlußelements 78 bildet eine Dämpferkammer 94, die Bremsflüssigkeitsdruckschwankungen am Pumpenauslaß dämpft.

Ein Pumpenauslaß erfolgt durch eine oder mehrere Ausstanzungen 96 im Umfang des Verschlußelements 78 in eine radial zur Zylinderbohrung 14 im Pumpengehäuse 12 angebrachte Auslaßbohrung 98.

### Beschreibung des zweiten Ausführungsbeispiels

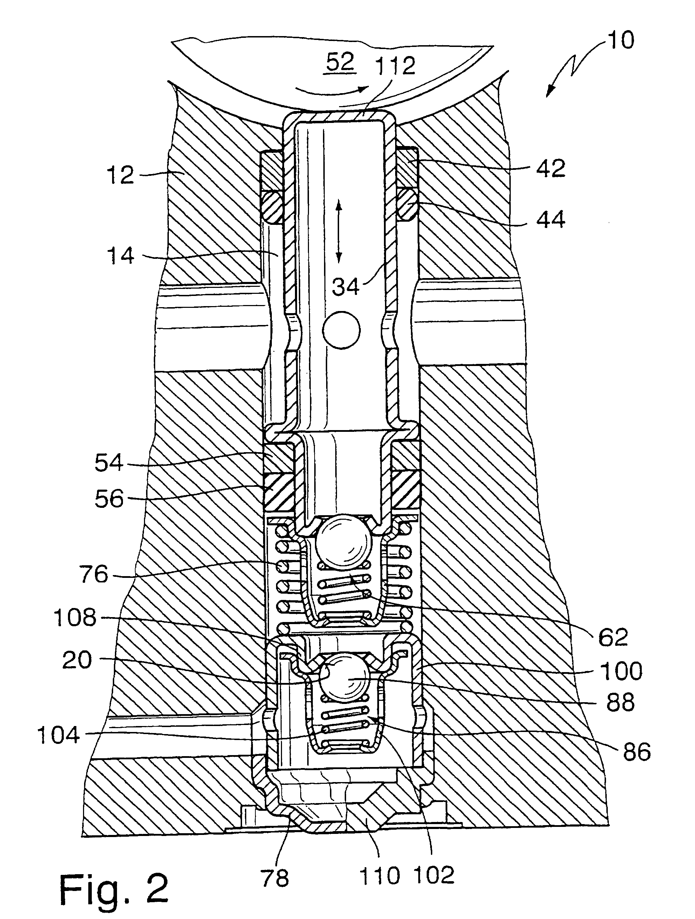

Die in Figur 2 dargestellte, erfindungsgemäße Kolbenpumpe 10 weist einen Kolben 34 mit einem daran angebrachten Einlaßventil 62 wie die in Figur 1 dargestellte Kolbenpumpe 10 auf. Die in Figur 2 dargestellte Kolbenpumpe 10 ist ebenfalls in eine Zylinderbohrung 14 in einem Hydraulikblock 12 eingesetzt, welcher ein Pumpengehäuse 12 bildet. Im Unterschied zur der in Figur 1 dargestellten Kolbenpumpe 10 fehlt bei der in Figur 2 dargestellten Kolbenpumpe 10 eine Laufbuchse ebenso wie das in die Laufbuchse eingepreßte Filterelement, der Kolben 34 der in Figur 2 dargestellten Kolbenpumpe 10 ist unmittelbar in der Zylinderbohrung 14 mit dem in die Zylinderbohrung 14 eingesetzten Führungsring 42 und dem auf den Kolben 34 aufgesetzten Führungsring 54 geführt sowie mit dem in die Zylinderbohrung 14 eingesetzten Dichtring 44 und dem auf den Kolben 34 aufgesetzten Dichtring 56 abgedichtet. Zur Vermeidung von Wiederholungen werden nachfolgend die Unterschiede zu der in Figur 1 dargestellten Kolbenpumpe 10 erläutert und es wird im übrigen auf die oben stehenden Ausführungen zum ersten Ausführungsbeispiel der Erfindung verwiesen. Für gleiche Bauteile werden gleiche Bezugszahlen verwendet.

Der Ventilsitz 20 des Auslaßventils 86 ist bei der in Figur 2 dargestellten Kolbenpumpe 10 an einem Ventilsitzteil 100 ausgebildet. Das Ventilsitzteil 100 ist ein hohlzylindrisches Tiefziehteil aus Blech, das in die Zylinderbohrung 14 eingepreßt ist. Der Ventilsitz 20 ist durch Umformen einstückig am Ventilsitzteil 100 angebracht. Das Auslaßventil 86 ist übereinstimmend mit dem Einlaßventil 62 ausgebildet, es weist einen ebensolchen Ventilkäfig 102 und eine in den Ventilkäfig 102 eingesetzte Ventilschließfeder 104 auf, die die Ventilkugel 88 gegen den Ventilsitz 20 drückt. Der Ventilkäfig 102 ist mit seiner Ringstufe 106 auf einen einstückig am Ventilsitzteil 100 angeformten Bund 108 aufgesetzt.

Die Zylinderbohrung 14 der in Figur 2 dargestellten Kolbenpumpe 10 ist ebenso wie die Zylinderbohrung 14 der in Figur 1 dargestellten Kolbenpumpe 10 mit einem als Tiefziehteil aus Blech hergestellten Verschlußelement 78 druckfest verschlossen, wobei das Verschlußelement 78 der in Figur 2 dargestellten Kolbenpumpe 10 axial kürzer als das Verschlußelement 78 der in Figur 1 dargestellten Kolbenpumpe 10 ist. Anstelle des tiefgezogenen Verschlußelements 78 kann auch ein durch Umformen, beispielsweise durch Kaltschlagen hergestelltes Verschlußelement 110 in die Zylinderbohrung 14 eingepreßt sein, wie in der rechten Bildhälfte von Figur 2 dargestellt.

Das Ventilsitzteil 100 mit dem an ihm angebrachten Auslaßventil 86 sowie das Verschlußelement 78, welches auf das Ventilsitzteil 100 aufgepreßt ist, bilden eine Vormontagebaugruppe.

Anstelle eines Anlaufstücks weist der Kolben 34 eine mit ihm einstückige Stirnwand 112 an seinem dem Exzenter 52 zugewandten Ende auf, mit der er am Umfang des Exzenters 52 anliegt. Die Stirnwand 112 ist durch Umformen in einem Arbeitsgang mit der Kolbenherstellung gefertigt. Sie ist durch Nitrocarbonitrieren zumindest im Bereich der Anlage am Exzenter 52 gehärtet und dadurch verschleißfest ausgebildet. Eine solche Stirnwand 112 kann auch am Kolben 34 der in Figur 1 dargestellten Kolbenpumpe 10 anstelle des Anlaufstücks 46 vorgesehen werden. Ebenso ist es möglich, den Kolben 34 der in Figur 2 dargestellten Kolbenpumpe 10 mit einem Anlaufstück 46 anstatt der Stirnwand 112 zu versehen.

## Patentansprüche

1. Kolbenpumpe, insbesondere für eine Fahrzeugbremsanlage, mit einem eine Zylinderbohrung (14) aufweisenden Pumpengehäuse (12), in der ein zu einer hin- und hergehenden Hubbewegung antreibbarer Kolben (34) axial verschieblich aufgenommen ist, wobei der Kolben (34) ein rohrartiges Bauteil ist, **dadurch gekennzeichnet, dass** der Kolben (34) einen nach außen stehenden, doppelwandigen Wulst (36) aufweist, der durch Umformen hergestellt ist, der axialen Abstand von beiden Enden des Kolbens (34) aufweist und der eine axiale Anlage für einen auf den Kolben (34) aufgesetzten Führungsring (54) und/oder Dichtring (56) bildet.

2. Kolbenpumpe nach Anspruch 1, **dadurch gekennzeichnet, daß** der Wulst (36) durch Stauchen des Kolbens (34) hergestellt ist.

3. Kolbenpumpe nach Anspruch 1, **dadurch gekennzeichnet, daß** der Kolben (34) ein Tiefziehteil ist.

4. Kolbenpumpe nach Anspruch 1, **dadurch gekennzeichnet, daß** der Kolben (34) als Stufenkolben ausgebildet ist.

5. Kolbenpumpe nach Anspruch 1, **dadurch gekennzeichnet, daß** der Kolben (34) einen durch Umformen hergestellten Ventilsitz (40) eines eine Pumpendurchströmungsrichtung steuernden Ventils (62) der Kolbenpumpe (10) aufweist.

6. Kolbenpumpe nach Anspruch 1, **dadurch gekennzeichnet, daß** der Kolben (34) ein Anlaufstück (46) an seinem einen Stirnende aufweist, und daß das Anlaufstück (46) eine verschleißfeste Stirnfläche als Anlauffläche (50) aufweist, mit der der Kolben (34) an einer Umfangsfläche eines rotierend antreibbaren Exzenterelements (52) anliegt.

7. Kolbenpumpe nach Anspruch 1, **dadurch gekennzeichnet, daß** der Kolben (34) eine mit ihm einstückige Stirnwand (112) aufweist, mit der er an einer Umfangsfläche eines rotierend antreibbaren Exzenterelements (52) anliegt, und daß diese Stirnwand (112) zumindest in einem am Exzenterelement (52) anliegenden Bereich verschleißfest ausgebildet ist.

8. Kolbenpumpe nach Anspruch 1, **dadurch gekennzeichnet, daß** die Kolbenpumpe (34) eine rohrartige Laufbuchse (16) aufweist, die in die Zylinderbohrung (14) des Pumpengehäuses (12) eingesetzt ist und in der der Kolben (34) axial verschieblich geführt ist.

9. Kolbenpumpe nach Anspruch 8, **dadurch gekennzeichnet, daß** die Laufbuchse (16) einen durch Umformen hergestellten Ventilsitz (20) eines die Pumpendurchströmungsrichtung steuernden Ventils (86) der Kolbenpumpe (10) aufweist.

10. Kolbenpumpe nach Anspruch 1, **dadurch gekennzeichnet, daß** die Kolbenpumpe (10) ein als Tiefziehteil hergestelltes Verschlußelement (78) für die Zylinderbohrung (14) aufweist, das die Zylinderbohrung (14) druckdicht verschließend auf einer dem Exzenterelement (52) abgewandten Seite der Kolbenpumpe (10) in das Pumpengehäuse (12) eingesetzt ist.

11. Kolbenpumpe nach Anspruch 1, **dadurch gekennzeichnet, daß** die Kolbenpumpe (10) ein in die Zylinderbohrung eingesetztes Ventilsitzteil (100) aufweist, das als Umformteil hergestellt ist und einen durch die Umformung hergestellten Ventilsitz (20) eines die Pumpendurchströmungsrichtung steuernden Ventils (86) der Kolbenpumpe (10) aufweist.

12. Kolbenpumpe nach Anspruch 11, **dadurch gekennzeichnet, daß** die Kolbenpumpe (10) eine das Ventilsitzteil (100) und das Ventil (86) umfassende Vormontagebaugruppe aufweist.

13. Kolbenpumpe nach Anspruch 12, **dadurch gekennzeichnet, daß** die Vormontagebaugruppe das Verschlußelement (78) aufweist.

## Claims

1. Piston pump, in particular for a vehicle brake system, with a pump casing (12) having a cylinder bore (14) in which a piston (34) capable of being driven in a to-and-fro lifting movement is received axially displaceably, the piston (34) being a tube-like component, **characterized in that** the piston (34) has an outward double-walled bead (36) which is produced by forming and which is at an axial distance from the two ends of the piston (34) and forms an axial bearing for a guide ring (54) and/or a sealing ring (56) placed onto the piston (34).

2. Piston pump according to Claim 1, **characterized in that** the bead (36) is produced by the upsetting of the piston (34).

3. Piston pump according to Claim 1, **characterized in that** the piston (34) is a deep-drawn part.

4. Piston pump according to Claim 1, **characterized in that** the piston (34) is designed as a stepped piston.

5. Piston pump according to Claim 1, **characterized in that** the piston (34) has a valve seat (40), produced by forming, of a valve (62) of the piston pump (10), the said valve controlling a pump throughflow direction.

6. Piston pump according to Claim 1, **characterized in that** the piston (34) has on one of its end faces a run-on piece (46), and **in that** the run-on piece (46) has, as a run-on face (50), a wear-resistant end face with which the piston (34) bears against a circumferential face of an eccentric element (52) capable of being driven in rotation.

7. Piston pump according to Claim 1, **characterized in that** the piston (34) has an end wall (112) which is one piece with it and with which it bears against the circumferential face of an eccentric element (52) capable of being driven in rotation, and **in that** this end wall (112) is of wear-resistant design at least in a region bearing against the eccentric element (52).

8. Piston pump according to Claim 1, **characterized in that** the piston pump (34) has a tube-like liner (16) which is inserted into the cylinder bore (14) of the pump casing (12) and in which the piston (34) is guided axially displaceably.

9. Piston pump according to Claim 8, **characterized in that** the liner (16) has a valve seat (20), produced by forming, of a valve (86) of the piston pump (10), the said valve controlling the pump throughflow direction.

10. Piston pump according to Claim 1, **characterized in that** the piston pump (10) has, for the cylinder bore (14), a closing element (78) which is produced as the deep-drawn part and which, closing the cylinder bore (14) in a pressure-tight manner, is inserted into the pump casing (12) on a side of the piston pump (10) which faces away from the eccentric element (52).

11. Piston pump according to Claim 1, **characterized in that** the piston pump (10) has a valve-seat part (100) which is inserted into the cylinder bore and which is produced as a formed part and has a valve seat (20), produced by forming, of a valve (86) of the piston pump (10), the said valve controlling the pump throughflow direction.

12. Piston pump according to Claim 11, **characterized in that** the piston pump (10) has a pre-mounting subassembly comprising the valve-seat part (100) and the valve (86).

13. Piston pump according to Claim 12, **characterized in that** the pre-mounting subassembly has the closing element (78).

## Revendications

1. Pompe à piston destinée en particulier à une installation de freinage de véhicule et comprenant un carter de pompe (12) présentant un alésage cylindrique (14) dans lequel un piston (34), pouvant être entraîné en vue d'un mouvement de course en va-et-vient, est logé de manière à se déplacer axialement, le piston (34) étant un élément de construction tubulaire,
**caractérisée en ce que**
le piston (34) comprend un renflement (36) à double paroi fabriqué par formage, faisant saillie vers l'extérieur, qui présente une certaine distance axiale vis-à-vis des deux extrémités du piston (34) et qui forme un appui axial pour une bague de guidage (54) et/ou garniture d'étanchéité (56) posée sur le piston (34).

2. Pompe à piston selon la revendication 1,
**caractérisée en ce que**
le renflement (36) est fabriqué par refoulement du piston (34).

3. Pompe à piston selon la revendication 1,
**caractérisée en ce que**
le piston (34) est un élément d'emboutissage.

4. Pompe à piston selon la revendication 1,
**caractérisée en ce que**
le piston (34) a la forme d'un piston à gradins.

5. Pompe à piston selon la revendication 1,
**caractérisée en ce que**
le piston (34) comprend un siège de soupape (40), fabriqué par formage, d'une soupape (62) de la pompe à piston (10), soupape qui règle la direction de traversée de la pompe.

6. Pompe à piston selon la revendication 1,
**caractérisée en ce que**
le piston (34) comprend un appendice de départ (46) à l'une de ses extrémités frontales, et l'appendice de départ présente une surface frontale résistant à l'usure en tant que surface de départ (50) par laquelle le piston (34) s'ajuste à une surface périphérique d'un élément d'excentrique (52) pouvant être entraîné de manière rotative.

7. Pompe à piston selon la revendication 1,
**caractérisée en ce que**
le piston (34) comprend une paroi frontale (112) formée d'une seule pièce avec lui et par laquelle il s'ajuste à une surface périphérique d'un élément d'excentrique pouvant être entraîné de manière rotative, et la paroi frontale (112) est constituée de manière à résister à l'usure au moins dans une zone adjacente à l'élément d'excentrique (52).

8. Pompe à piston selon la revendication 1,
**caractérisée en ce que**
le piston (34) comprend une boîte de glissement tubulaire (16) insérée dans l'alésage cylindrique (14) du carter de pompe (12) et dans laquelle le piston (34) est guidé de manière à se déplacer axialement.

9. Pompe à piston selon la revendication 8,
**caractérisée en ce que**
la boîte de glissement (16) comprend un siège de soupape (20), fabriqué par formage, d'une soupape (86) de la pompe à piston (10), soupape qui règle la direction de traversée de la pompe.

10. Pompe à piston selon la revendication 1,
**caractérisée en ce que**
la pompe à piston (10) comprend un élément de fermeture (78), fabriqué sous forme d'élément d'emboutissage, pour l'alésage cylindrique (14), élément qui est inséré dans le carter de pompe (12), sur un côté de la pompe à piston (10) qui tourne le dos à l'élément d'excentrique (52), de manière à fermer hermétiquement l'alésage cylindrique (14).

11. Pompe à piston selon la revendication 1,
**caractérisée en ce que**
la pompe à piston (10) comprend un élément de siège soupape (100), inséré dans l'alésage cylindrique, qui est fabriqué sous forme d'élément de formage et qui comprend un siège (20), fabriqué au moyen du formage, d'une soupape (86) de la pompe à piston (10), soupape qui règle la direction de traversée de la pompe.

12. Pompe à piston selon la revendication 11,
**caractérisée en ce que**
la pompe à piston (10) comprend un module de prémontage incluant l'élément de siège de soupape (100) et la soupape (86).

13. Pompe à piston selon la revendication 12,
**caractérisée en ce que**
le module de prémontage comprend l'élément de fermeture (78).
